# EUROPÄISCHE PATENTSCHRIFT

(11) **EP 2 529 963 B1**
(45) Veröffentlichungstag und Bekanntmachung des Hinweises auf die Patenterteilung: **17.09.2014**
(21) Anmeldenummer: 12169516.7
(22) Anmeldetag: 25.05.2012
(51) Int. Cl.: B60J 1/20

(54) **Beschattungssystem und Rolloeinheit hierfür**
Shading system and roller unit for same
Système d'ombrage et unité de store à enrouleur à cet effet

(30) Priorität: 01.06.2011 DE 102011076892
(43) Veröffentlichungstag der Anmeldung: 05.12.2012
(73) Patentinhaber: BOS GmbH & Co. KG, 73760 Ostfildern (DE)
(72) Erfinder: Gradl, Jürgen, 72649 Wolfschlugen (DE)
(74) Vertreter: Patentanwälte Ruff, Wilhelm, Beier, Dauster & Partner

(56) Entgegenhaltungen:
- EP-A1- 1 129 871
- DE-A1- 10 334 721
- DE-U1-202007 004 175

## Beschreibung

### Anwendungsgebiet und Stand der Technik

Die Erfindung betrifft eine Rolloeinheit für ein Beschattungssystem sowie ein Beschattungssystem zur Beschattung eines zweigeteilten Seitenfensters eines Kraftfahrzeugs mit einem solchen Beschattungssystem. Eine gattungsgemäße Rolloeinheit, wie sie z.B. in DE 202007004175 U offenbart wird, dient der Abdeckung eines Dreiecksfensters eines Kraftfahrzeugs und weist ein flexibles Flächengebilde und eine um eine vertikale Achse drehbare Wickelwelle auf, wobei das Flächengebilde in einem Stauzustand auf dieser Wickelwelle aufgewickelt und in einen Funktionszustand in horizontaler Auszugsrichtung von der Wickelwelle abgewickelt ist und wobei eine Auszugsfederanordnung vorgehen ist, die an einem distalen Ende des Flächengebildes angreift und eine Kraftbeaufschlagung des Flächengebildes in Richtung des Funktionszustandes bewirkt.

Ein gattungsgemäßes Beschattungssystem verfügt über eine erste Rolloeinheit zur Beschattung einer ersten Scheibe des Seitenfensters und eine zweite Rolloeinheit zur Beschattung einer zweiten Scheibe des Seitenfensters. Dabei sind beide Rolloeinheiten jeweils mit einem flexiblen Flächengebilde und einer drehbaren Wickelwelle ausgebildet, wobei das Flächengebilde in einem Stauzustand auf der jeweiligen Wickelwelle aufgewickelt und in einem Funktionszustand von der jeweiligen Wickelwelle abgewickelt ist. Bei einem gattungsgemäßen Beschattungssystem ist weiterhin vorgesehen, dass die Rolloeinheiten zur zumindest mittelbar manuellen Überführung aus dem Stauzustand in den Funktionszustand ausgebildet sind, dass das erste Flächengebilde zur manuellen Überführung in den Funktionszustand mittels einer externen Kraftbeaufschlagung am distalen Ende des ersten Flächengebildes vorgesehen ist, und dass die Rolloeinheiten derart wirkgekoppelt sind, dass die manuelle Überführung des ersten Flächengebildes in seinen Funktionszustand mittelbar auch die Überführung des zweiten Flächengebildes in seinen Funktionszustand bewirkt,

Ein gattungsgemäßes Beschattungssystem findet Verwendung zur getrennten Beschattung zweier Scheiben eines Seitenfensters. Hierbei handelt es sich üblicherweise um eine in etwa rechteckige größere Scheibe, die zumeist versenkbar ausgebildet ist, und eine kleinere in etwa dreieckige Scheibe, die sich heckseitig an die größere Scheibe anschließt.

Ein hierfür vorgesehenes gattungsgemäßes Beschattungssystem ist zur manuellen Handhabung vorgesehen. Es ist somit kein Elektromotor erforderlich, wodurch Kosten gespart werden.

Aus der DE 10334721 A1 ist ein dem erfindungsgemäßen Beschattungssystem verwandtes gattungsgemäßes Beschattungssystem bereits bekannt. Bei diesem wird das Dreiecksfenster durch einen translativ verfahren Arm ausgezogen. Dies ist konstruktiv vergleichsweise aufwändig.

### Aufgabe und Lösung

Aufgabe der Erfindung ist es daher, eine gattungsgemäße Rolloeinheit für ein Dreiecksfenster dahingehend weiterzubilden, dass sie einen zuverlässigen, Raum sparenden und einfachen Aufbau aufweist.

Erfindungsgemäß ist in Hinblick auf diese Rolloeinheit vorgesehen, dass die Auszugsfederanordnung einen um ortsfeste Schwenkachse schwenkbaren Hebel aufweist, der zur Kraftbeaufschlagung des Flächengebildes in Auszugsrichtung durch eine am Hebel angreifende Hebelfeder momentenbeaufschlagt ist und dessen von der Schwenkachse abgewandtes distales Ende am distalen Ende des zweiten Flächengebildes angebracht ist. Diese Gestaltung einer Rolloeinheit kann insbesondere wegen des sehr geringen Bauraumerfordernisses vorteilhaft sein.

Die Schwenkachse, um die der Hebel schwenkbar ist, ist ortsfest zur Tür und ortsfest zur Drehachse der Wickelwelle vorgesehen.

Die Hebelfeder kann unmittelbar als Torsionsfeder, beispielsweise als Schenkelfeder oder Spiralfeder, ausgebildet sein, die im Bereich der Schwenkachse des schwenkbaren Hebels vorgesehen ist. Auch denkbar ist jedoch die Verwendung von Linearfedern, wie beispielsweise einer Schraubenfeder, die beabstandet von der Schwenkachse am schwenkbaren Hebel angreift und diesen dadurch momentenbeaufschlagt.

Die genannte Hebelgestaltung ist mit wenigen Teilen realisierbar und bedarf keiner Komponenten, die noch jenseits des distalen Endes des Flächengebildes in dessen Funktionszustand angeordnet sein müssen. Die Anbringung des distalen Endes des Hebels am distalen Ende des Flächengebildes kann mit einer Schwenkachsanordnung vorgesehen sein, die zum distalen Ende des Flächengebildes und zum Hebel ortsfest ist. Vorteilhaft ist jedoch, wenn am Hebel oder am distalen Ende des Flächengebildes ein Ausgleichsmittel wie ein Langloch vorgesehen wird, so dass eine zuverlässige Kraftbeaufschlagung des distalen Endes des Flächengebildes möglich ist, obwohl das Flächengebilde üblicherweise lediglich linear bewegt wird, während der Hebel aufgrund seiner Schwenkbarkeit eine Kreisbahn beschreibt.
Die erfindungsgemäße Rolloeinheit findet vorzugsweise in einem erfindungsgemäßen Beschattungssystem Verwendung.

Die beiden bei einem erfindungsgemäßen Beschattungssystem vorgesehenen Rolloeinheiten sind in der schon dargestellten Weise jeweils einer der beiden Scheiben des Seitenfensters zugeordnet, wobei vorzugsweise die erste Rolloeinheit der größeren und zumeist rechteckigen vorderen Scheibe zugeordnet ist, während die zweite Rolloeinheit vorzugsweise der kleineren und vorzugsweise dreieckigen hinteren Scheibe zugeordnet ist. Die Rolloeinheiten sind insofern voneinander getrennt, als dass sie jeweils eine eigene Wickelwelle aufweisen, wobei die Wickelwellen zumindest nicht drehstarr miteinander verbunden sind. So können die Drehachsen der Wickelwellen gegeneinander angewinkelt oder gegeneinander parallel verlagert sein. Auch können sich die Drehgeschwindigkeiten der Wickelwellen bei der Überführung der beiden Flächengebilde in ihren jeweiligen Funktionszustand zumindest phasenweise voneinander unterscheiden.

Bei dem Beschattungssystem ist vorgesehen, dass die Rolloeinheiten zur manuellen Überführung aus dem Stauzustand in den Funktionszustand vorgesehen sind, wobei hierzu eine manuelle Kraftbeaufschlagung am distalen Ende des ersten Flächengebildes aufgrund der Wirkkopplung der Rolloeinheiten miteinander auch eine Bewegung des zweiten Flächengebildes in Richtung seines Funktionszustandes bewirkt. Somit muss der Bediener lediglich eine der Rolloeinheiten, insbesondere deren Flächengebilde, unmittelbar handhaben, um dadurch mittelbar auch das andere Flächengebilde zu bewegen. Neben dem Vorteil, dass dadurch ein separater Handhabungsvorgang für den Bediener entfällt, kann je nach Ausgestaltung auch die mitunter unbequeme horizontale Verlagerung eines Flächengebildes dadurch vermieden werden. So kann beispielsweise ein vertikales Hochziehen des ersten Flächengebildes zur Beschattung der in etwa rechteckigen Scheibe mittelbar die horizontale Verlagerung des zweiten Flächengebildes zur Beschattung der dreieckigen Scheibe bewirken.

Als zur manuellen Bedienung vorgesehenes Beschattungssystem weist ein erfindungsgemäßes Beschattungssystem keinen Motor auf, der durch Energiezufuhr die Verlagerung der Flächengebilde gestattet.

Im Hinblick auf die Wirkkopplung der beiden Rolloeinheiten liegt eine Möglichkeit darin, die beiden Wickelwellen jeweils mittels einer eigenen Wickelfeder permanent mit einem Aufwickelmoment zu beaufschlagen.

Aufgrund der Verwendung der erfindungsgemäßen Rolloeinheit als zweite Rolloeinheit des Beschattungssystems ist eine Auszugsfederanordnung vorgesehen ist, die an einem distalen Ende des zweiten Flächengebildes angreift und eine Kraftbeaufschlagung eines zweiten Flächengebildes in Richtung des Funktionszustandes bewirkt. Da die erste und die zweite Wickelwelle mittels eines Getriebes mechanisch gekoppelt sind, bewirkt eine Momentenbeaufschlagung der ersten Wickelwelle auch eine Momentenbeaufschlagung der zweiten Wickelwelle. Es ist weiterhin vorzugsweise eine Aufwickelfederanordnung vorgesehen ist, die an zumindest einer der Wickelwellen angreift und eine Momentenbeaufschlagung der Wickelwellen in Aufwickelrichtung bewirkt, wobei die Auszugsfederanordnung und die Aufwickelfederanordnung derart aufeinander abgestimmt sind, dass die Rolloeinheiten bei Wegfall der externen Kraftbeaufschlagung am distalen Ende des ersten Flächengebildes ihren Stauzustand einnehmen.

Die Auszugsfederanordnung versucht somit permanent, das zweite Flächengebilde in seinen abgewickelten Funktionszustand zu ziehen. Solange keine externe Kraftbeaufschlagung in Auszugsrichtung am ersten Flächengebilde vorliegt, reicht die durch die Auszugsfederanordnung bewirkte Kraft jedoch nicht aus, um das zweite Flächengebilde abzuwickeln. Die Aufwickelfederanordnung, die im einfachsten Falle eine schlichte Wickelfeder an der ersten Wickelwelle sein könnte, wirkt diesem Auszug entgegen. Erst wenn eine zusätzliche externe Kraftbeaufschlagung am distalen Ende des ersten Flächengebildes mit ausreichender Stärke erfolgt, kann die durch die Aufwickelfederanordnung auf die Flächengebilde in Aufwickelrichtung bewirkte Kraft überwunden werden und somit das erste Flächengebilde und mit ihm auch das zweite Flächengebilde in Richtung ihres jeweiligen Funktionszustandes verlagert werden. Unter der genannten externen Kraft wird primär die zur Überführung in den Funktionszustand manuell aufgebrachte Kraft verstanden. Eine externe Kraftbeaufschlagung liegt jedoch auch vor, wenn das erste Flächengebilde nach Erreichen seines Funktionszustandes in dieser Lage durch Haltemittel, im einfachsten Falle einen Einhängehaken, fixiert wird.

Die genannte Gestaltung des erfindungsgemäßen Beschattungssystems mit einer erfindungsgemäßen Rolloeinheit als zweiter Rolloeinheit hat eine Reihe positiver Aspekte. So ist insbesondere die Wirkkopplung zwischen den Rolloeinheiten im engeren Sinne sehr einfach auszugestalten. So kann ein einfaches Zahnradgetriebe, welches die Wickelwellen miteinander koppelt, ausreichen. Die Kraftbeaufschlagung des zweiten Flächengebildes in Richtung seines Funktionszustandes permanent gegeben sein, was baulich zu sehr einfachen Lösungen führt. Auch liegt bei dieser Gestaltung ein Vorteil darin, dass durch die passende Auslegung der Auszugsfederanordnung und der Aufwickelfederanordnung die zur Herstellung des Funktionszustandes der Rolloanordnung erforderliche manuelle Kraft sehr gering sein kann. Wenn die Auszugsfederanordnung so ausgelegt wird, dass sie alleine annähernd ausreicht, um die von der Aufwickelfederanordnung bewirkte Kraft zu überwinden, reicht eine minimale Auszugskraft, um den Funktionszustand zu bewirken.

Bei einer Weiterbildung des genannten Beschattungssystems ist vorgesehen, dass die Drehachse der ersten Wickelwelle nicht parallel zu der Drehachse der zweiten Wickelwelle ausgebildet ist. So kann insbesondere ein in etwa rechter Winkel (zwischen 75° und 105°) vorliegen, der die Anordnung der ersten Wickelwelle in der Fensterbrüstung und die Anordnung der zweiten Wickelwelle in einem vertikalen Steg zwischen den beiden Scheiben gestattet.

Weiterhin ist es von Vorteil, wenn die Aufwickelfederanordnung über lediglich eine Wickelfeder verfügt, wobei diese Wickelfeder mittelbar über die erste oder die zweite Wickelfeder auf die jeweils andere Wickelfeder wirkt. Hierbei wird die Tatsache genutzt, dass die Wickelfedern über ein Getriebe miteinander gekoppelt sind, so dass es keiner zwei Wickelfedern bedarf. Die nur eine vorgesehene Wickelfeder kann insbesondere eine Spiralfeder oder Schraubenfeder sein, die in einer der Wickelwellen oder angrenzend zu einer der Wickelwellen angeordnet ist. Von besonderem Vorteil ist es, wenn die erste Wickelwelle, die das Flächengebilde zur Beschattung der größeren Scheibe aufnimmt, mit dieser Wickelwelle versehen ist. Hierdurch wird der erforderliche Bauraum zur Aufnahme der zweiten Wickelwelle reduziert. Gerade wenn diese zweite Wickelwelle im Bereich eines Steges zwischen den Scheiben angeordnet ist, ist dies aufgrund des hier sehr knapp verfügbaren Bauraums von erheblichem Vorteil.

Weiterhin ist es bei einem erfindungsgemäßen Beschattungssystem von Vorteil, wenn das Getriebe zwischen den beiden Wickelwellen ein Zahnradgetriebe ist. Ein solches ist einfach und preisgünstig herzustellen und gestattet es, die Drehgeschwindigkeiten der Wickelwellen auf einfache Weise in ein gewünschtes festes Verhältnis zueinander zu setzen. Bei einer Gestaltung, bei der die Drehachsen der Wickelwellen etwa in einem rechten Winkel zueinander stehen, findet vorzugsweise ein Zahnradgetriebe mit zwei jeweils an einer der Wickelwellen drehfest vorgesehenen Kegelrädern Anwendung.

Alternativ zur Anpassung der Drehgeschwindigkeiten der Wickelwellen aneinander kann durch die entsprechende Wahl einer Zähnezahl auch eine übereinstimmende Geschwindigkeit zweckmäßig sein, wenn zur Erzielung der üblicherweise verschiedenen Auszugslängen der beiden Rolloeinheiten jeweils angepasste Durchmesser der Wickelwellen genutzt werden.

Die Erfindung betrifft weiterhin auch eine Seitentür für ein Kraftfahrzeug mit einem zweigeteilten Seitenfenster und einem Beschattungssystem zur Beschattung des Seitenfensters, wobei das Beschattungssystem dem oben beschriebenen erfindungsgemäßen Beschattungssystem entspricht und/oder eine Rolloeinheit entsprechend der oben beschriebenen erfindungsgemäßen Rolloeinheit aufweist. Von besonderem Vorteil ist es dabei, wenn zwischen der ersten Scheibe des Seitenfensters und der zweiten Scheibe des Seitenfensters ein türfester Steg vorgesehen ist, wobei die zweite Wickelwelle an diesem Steg angebracht ist oder sich zumindest parallel zu diesem Steg erstreckt.

Auch von der Erfindung umfasst ist ein Kraftfahrzeug mit einem zweigeteilten Seitenfenster und einem Beschattungssystem zur Beschattung des Seitenfensters. Auch dies kann mit einem erfindungsgemäßen Beschattungssystem oder zumindest mit einem Beschattungssystem mit einer erfindungsgemäßen Rolloeinheit ausgerüstet sein.

### Kurzbeschreibung der Zeichnungen

Weitere Vorteile und Aspekte der Erfindung ergeben sich außer aus den Ansprüchen aus der nachfolgenden Beschreibung eines bevorzugten Ausführungsbeispiels der Erfindung, welches anhand der Figuren erläutert ist. Dabei zeigen:
- Fig. 1: den Heckbereich eines Kraftfahrzeugs mit einem zweiteiligen Seitenfenster, an dem ein erfindungsgemäßes Beschattungssystem mit einer erfindungsgemäßen Rolloeinheit vorgesehen ist und
- Fig. 2a und 2b: das Beschattungssystem der Fig. 1 in einem Stauzustand und einem Funktionszustand.

### Detaillierte Beschreibung des Ausführungsbeispiels

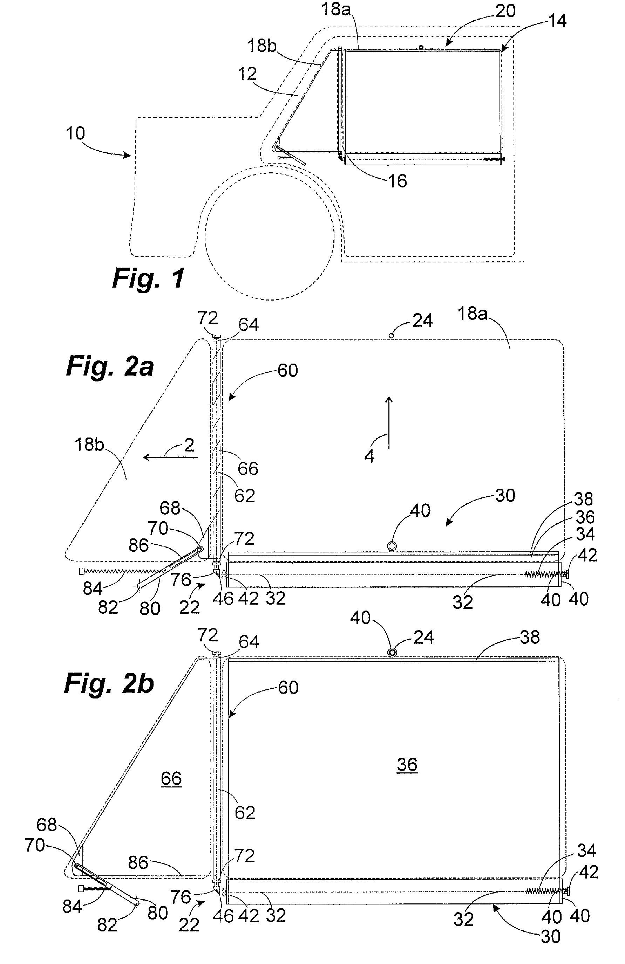

Fig. 1 zeigt den Heckbereich eines Fahrzeugs 10. Dieses verfügt über eine heckseitige Seitentür 12 mit einem zweigeteilten Seitenfenster 14. Dieses Seitenfenster umfasst, voneinander durch einen Steg 16 getrennt, eine in etwa rechteckige frontseitige Seitenscheibe 18a und eine sich heckseitig daran anschließende Dreiecksscheibe 18b.

Um das durch die Scheiben 18a, 18b in den Fahrzeuginnenraum eintretende Licht zu vermindern, ist ein Beschattungssystem 20 vorgesehen.

Dieses Beschattungssystem 20 ist in den Fig. 2a und 2b vergrößert dargestellt. Dabei zeigt Fig. 2a einen Stauzustand des Beschattungssystems 20, in dem das Beschattungssystem 20 keine Beschattungswirkung entfaltet. Die Fig. 2b zeigt das Beschattungssystem 20 in einem Funktionszustand, in dem mittels nachfolgend noch erläuterter Flächengebilde der Lichteinfall in den Fahrzeuginnenraum gesenkt ist.
Das Beschattungssystem 20 verfügt über zwei Rolloeinheiten 30, 60. Die erste Rolloeinheit 30 verfügt ihrerseits über eine um eine Drehachse 32 drehbar gelagerte erste Wickelwelle 34, die in durch Verkleidungsteile blickdicht geschützter Weise im Bereich einer Fensterbrüstung unterhalb der Scheibe 18a angeordnet ist. Auf dieser Wickelwelle 34 ist im Stauzustand der Fig. 2a ein formflexibles, beispielsweise textiles, Flächengebilde 36 aufgewickelt, an dessen distalem Ende eine vergleichsweise starre Auszugsstange 38 mit einer Einhängeöse 40 vorgesehen ist. Für die Lagerung der ersten Wickelwelle 34 sind zwei Lagerblöcke 42 beidseitig der Wickelwelle 34 angeordnet, welche ortsfest an der Fahrzeugtür 12 angebracht sind. Der rechte der Lagerblöcke 42 dient darüber hinaus als Widerlager für eine Wickelfeder 44, die anderenends mit der Wickelwelle 34 verbunden ist. Die Wickelwelle 44 ist derart vorgespannt, dass sie auch bereits im Stauzustand der Fig. 2b ein Moment in die erste Wickelwelle 34 einleitet, welches in Aufwickelrichtung wirkt.

Die zweite Rolloeinheit 60 verfügt ebenfalls über eine Wickelwelle 64, welche um eine Drehachse 62 drehbar ist, welche im rechten Winkel zur Drehachse 32 der ersten Wickelwelle 34 ausgerichtet ist. Auf dieser zweiten Wickelwelle 64 ist ein weiteres formflexibles Flächengebilde 66 im Stauzustand der Fig. 2a aufgewickelt, welches korrespondierend zur Scheibe 18b in etwa eine dreieckige Form aufweist. Am distalen Ende dieses zweiten Flächengebildes 66 ist ein vergleichsweise starrer Auszugsabschnitt 68 vorgesehen. Entsprechend der ersten Rolloeinheit 30 ist auch die Wickelwelle 64 der zweiten Rolloeinheit 60 mittels türfest vorgesehenen Lagerblöcken 72 drehbar gelagert, wobei im Bereich der Lagerblöcke 72 und der zweiten Wickelwelle 64 keinerlei Wickelfeder vorgesehen ist. Allerdings verfügt die zweite Rolloeinheit 60 über einen Schwenkhebel 80, der um eine türfest vorgesehene Schwenkachse 82 schwenkbeweglich ist und der mittels einer Zugfeder 84 stets in Richtung des Fahrzeughecks momentenbeaufschlagt ist. Dieser Hebel 80 ist mit dem Auszugsabschnitt 68 über ein hebelseitiges Langloch 86 und einen am Auszugsabschnitt 68 vorgesehenen Kulissenbolzen 70 verbunden.

Aufgrund der im Stauzustand der Fig. 2a vorliegenden Vorspannung der Feder 84, die den Hebel 80 entgegen dem Uhrzeigersinn zu verschwenken sucht, wird das Flächengebilde 66 somit stets in Auszugsrichtung 2 kraftbeaufschlagt.

Die beiden Wickelwellen 34, 64 sind über ein Getriebe 22 miteinander gekoppelt. Bei der dargestellten Ausgestaltung wird dieses Getriebe durch ein drehfest mit der ersten Wickelwelle 34 verbundenes erstes Kegelzahnrad 46 und ein damit kämmendes und mit der zweiten Wickelwelle 66 drehfest verbundenes zweites Kegelrad 76 gebildet. Im vorliegenden Fall einer übereinstimmenden Zähnezahl führt dies dazu, dass die Wickelwellen 34, 64 stets mit übereinstimmender Winkelgeschwindigkeit drehen.

Aufgrund der Wirkkopplung der beiden Rollosysteme 30, 60 über das Getriebe 22 ist der in Fig. 2A dargestellte Stauzustand stabil. Zwar führt die durch die Feder 84 über den Hebel 80 auf das Flächengebilde 66 wirkende Kraft zur Einleitung eines Drehmoments in die zweite Wickelwelle 64 und somit über das Getriebe 22 auch zur Einleitung eines Drehmoments in die erste Wickelwelle 34. Das in entgegengesetzter Richtung wirkende Drehmoment der Wickelfeder 44 ist jedoch größer, so dass der Spannungszustand in der Feder 84 erhalten bleibt und ein Abwickeln der Flächengebilde 36, 66 nicht erfolgt. Erst wenn manuell durch einen Bediener eine Auszugskraft an der Auszugsstange 38 des ersten Rollosystems 30 in Richtung 4 bewirkt wird und damit ein der Vorspannung der Wickelfeder 44 entgegengerichtetes Drehmoment in die erste Wickelwelle 34 eingeleitet wird, wird eine Abwickelbewegung des Flächengebildes 36 erzielt. Aufgrund der Kopplung der Wickelwellen 34, 64 über das Getriebe 22 dreht sich infolgedessen auch die Wickelwelle 64 und gibt das zweite Flächengebilde 66 nach und nach frei, so dass dies gleichzeitig mit der Bewegung des ersten Flächengebildes 36 in seinen Funktionszustand und gezogen durch den Hebel 80 ebenfalls in seinen Funktionszustand überführt wird. Sobald das erste Flächengebilde 36 ausreichend weit abgewickelt wurde, kann es mittels seiner Halteöse 40 an einen korrespondierenden Haltehaken 24 eingehängt werden.

Der somit erreichte Funktionszustand, der in Fig. 2b dargestellt ist, bleibt anschließend auch nach Wegfall der manuellen Kraftbeaufschlagung des zweiten Flächengebildes 36 erhalten.

Sobald die Halteöse 40 wieder vom Haltehaken 24 gelöst wird, nimmt das System unter der Einwirkung der Wickelfeder 44 und bei gleichzeitigem Spannen der Zugfeder 84 wieder seinen Stauzustand der Fig. 2a ein.

Eine Vielzahl von Abwandlungen des dargestellten Systems ist denkbar und von der Erfindung umfasst. So können beispielsweise die Federn 44, 84 abweichend von der dargestellten Ausführungsform auch durch andere beliebige Federn ersetzt werden, die zur Einleitung eines Drehmoments in die Wickelwelle 34 bzw. den Hebel 80 geeignet sind. Auch kann zusätzlich zur Wickelfeder 44 oder statt der Wickelfeder 44 auch eine entsprechende Wickelfeder an der zweiten Rollowelle 64 vorgesehen sein. Weiterhin sind andere Formen von Getrieben denkbar, insbesondere auch solche, die eine Übersetzung oder Untersetzung aufweisen, um das Verhältnis der Winkelgeschwindigkeiten der Wickelwellen 34, 64 hierdurch zu variieren. Dies kann insbesondere in Hinblick auf die verschiedenen Auszugslängen der Flächengebilde 36, 66 zweckmäßig sein, wobei vorliegend ein ähnlicher Effekt durch die variierenden Durchmesser der Wickelwellen 34, 64 erzielt wird. Des Weiteren sind Gestaltungen denkbar, bei denen die Anordnung der beiden Wickelwellen 34, 64 von der dargestellten Ausführungsform abweichen. So könnte beispielsweise die Wickelwelle 64 ebenfalls in der Fensterbrüstung unterhalb der Scheibe 18b vorgesehen sein. Auch könnten beide Wickelwellen im Bereich des Steges 16 und zueinander parallel ausgerichtet sein. Insbesondere die das Dreiecksfenster 18b überdeckende zweite Rolloeinheit 60 könnte auch eine pendelnd gelagerte Wickelwelle oder eine konische Wickelwelle aufweisen, so dass bei entsprechender Anordnung der Schwenkachse 82 des Hebels 80 auf das Langloch 86 verzichtet werden könnte.

## Patentansprüche

1. Rolloeinheit (60) zur Beschattung einer heckseitigen Dreieckscheibe (18b) eines zweigeteilten Seitenfensters (14) eines Fahrzeugs mit
- einem flexiblen Flächengebilde (66) und
- einer um eine vertikale Achse (62) drehbaren Wickelwelle (64),
wobei
- das Flächengebilde (66) in einem Stauzustand auf der Wickelwelle (64) aufgewickelt und in einem Funktionszustand in horizontaler Auszugsrichtung (2) von der Wickelwelle (64) abgewickelt ist und
- die Rolloeinheit eine Auszugsfederanordnung (80, 84) umfasst, die an einem distalen Ende (68, 70) des Flächengebildes angreift und eine Kraftbeaufschlagung des Flächengebildes (66) in Richtung (2) des Funktionszustandes bewirkt,
**dadurch gekennzeichnet, dass**
die Auszugsfederanordnung (80, 84) einen um eine im Bezug zur Drehachse der Wickelwelle ortsfeste Schwenkachse (82) schwenkbaren Hebel (80) aufweist, der zur Kraftbeaufschlagung des Flächengebildes (66) in Auszugsrichtung (2) durch eine am Hebel (80) angreifende Hebelfeder (84) momentenbeaufschlagt ist und dessen von der Schwenkachse (82) abgewandtes distales Ende (86) am distalen Ende (68, 70) des Flächengebildes (66) angebracht ist.

2. Rolloeinheit nach Anspruch 1,
**dadurch gekennzeichnet, dass**
am distalen Ende des Hebels oder am distalen Ende des Flächengebildes ein Ausgleichsmittel zum Ausgleich zwischen einer linearen Auszugsbewegung des Flächengebildes (66) und einer durch die Schwenkbarkeit des Hebels (80) definierten Kreisbahnbewegung, vorgesehen ist.

3. Beschattungssystem (20) zur Beschattung eines zweigeteilten Seitenfensters (14) eines Kraftfahrzeugs (10) mit
- einer ersten Rolloeinheit (30) zur Beschattung einer ersten Scheibe (18a) des Seitenfensters (14), wobei die erste Rolloeinheit (30) ein erstes flexibles Flächengebilde (36) und eine erste drehbare Wickelwelle (34) aufweist und wobei das erste Flächengebilde (36) in einem Stauzustand auf der ersten Wickelwelle (34) aufgewickelt und in einem Funktionszustand von der ersten Wickelwelle (34) abgewickelt ist,
- einer zweiten Rolloeinheit (60) zur Beschattung einer zweiten Scheibe (18b) des Seitenfensters (14), wobei die zweite Rolloeinheit (60) ein zweites flexibles Flächengebilde (66) und eine zweite drehbare Wickelwelle (64) aufweist und wobei das zweite Flächengebilde (66) in einem Stauzustand auf der zweiten Wickelwelle (64) aufgewickelt und in einem Funktionszustand von der zweiten Wickelwelle abgewickelt ist,
wobei
- die Rolloeinheiten (30, 60) zur zumindest mittelbar manuellen Überführung aus dem Stauzustand in den Funktionszustand ausgebildet sind,
- das erste Flächengebilde (36) zur manuellen Überführung in den Funktionszustand mittels einer externen Kraftbeaufschlagung am distalen Ende (38, 40) des ersten Flächengebildes (36) vorgesehen ist, und
- die Rolloeinheiten (30, 60) derart wirkgekoppelt sind, dass die manuelle Überführung des ersten Flächengebildes (36) in seinen Funktionszustand mittelbar auch die Überführung des zweiten Flächengebildes (66) in seinen Funktionszustand bewirkt,
**dadurch gekennzeichnet, dass**
die zweite Rolloeinheit (60) nach Anspruch 1 oder 2 ausgebildet ist.

4. Beschattungssystem (20) nach Anspruch 3,
**dadurch gekennzeichnet, dass**
- die erste und die zweite Wickelwelle (34, 64) mittels eines Getriebes (22) mechanisch gekoppelt sind, so dass eine Momentenbeaufschlagung der ersten Wickelwelle (34) eine Momentenbeaufschlagung der zweiten Wickelwelle (64) bewirkt,
- eine Aufwickelfederanordnung (44) vorgesehen ist, die an zumindest einer der Wickelwellen (34) angreift und eine Momentenbeaufschlagung der Wickelwellen (34, 64) in Aufwickelrichtung bewirkt,
- die Auszugsfederanordnung (80, 84) und die Aufwickelfederanordnung (44) derart aufeinander abgestimmt sind, dass die Rolloeinheiten (30, 60) bei Wegfall der externen Kraftbeaufschlagung des distalen Endes (38, 40) des ersten Flächengebildes (36) ihren Stauzustand einnehmen.

5. Beschattungssystem (20) nach Anspruch 3 oder 4,
**dadurch gekennzeichnet, dass**
eine Drehachse (32) der ersten Wickelwelle (34) nichtparallel zu einer Drehachse (62) der zweiten Wickelwelle (64) ausgebildet ist.

6. Beschattungssystem (20) nach Anspruch 4 oder 5,
**dadurch gekennzeichnet, dass**
die Aufwickelfederanordnung (44) über lediglich eine Wickelfeder (44) verfügt, wobei diese Wickelfeder (44) mittelbar über die erste oder die zweite Wickelwelle (34) auf die jeweils andere Wickelwelle (64) wirkt.

7. Beschattungssystem (20) nach einem der Ansprüche 4 bis 6,
**dadurch gekennzeichnet, dass**
das Getriebe (22) ein Zahnradgetriebe ist, vorzugsweise ein Zahnradgetriebe mit zwei jeweils an einer der Wickelwellen drehfest vorgesehenen Kegelrädern (46, 76).

8. Seitentür (12) für ein Kraftfahrzeug (10) mit einem zweigeteilten Seitenfenster (14) und einem Beschattungssystem (20) zur Beschattung des Seitenfensters (14),
**dadurch gekennzeichnet, dass**
das Beschattungssystem (20) nach einem der Ansprüche 3 bis 7 ausgebildet ist und/oder eine Rolloeinheit (60) nach Anspruch 1 oder 2 aufweist.

9. Seitentür (12) nach Anspruch 8, mit einem Beschattungssystem nach einem der Ansprüche 3 bis 7,
**dadurch gekennzeichnet, dass**
zwischen der ersten Scheibe (18a) des Seitenfensters (14) und der zweiten Scheibe (18b) des Seitenfensters (14) ein Steg (16) vorgesehen ist, wobei die zweite Wickelwelle (64) an diesem Steg (16) angebracht ist.

10. Kraftfahrzeug (10) mit einem mit einem zweigeteilten Seitenfenster (14) und einem Beschattungssystem (20) zur Beschattung des Seitenfensters (14),
**dadurch gekennzeichnet, dass**
das Beschattungssystem (20) nach einem der Ansprüche 3 bis 7 ausgebildet ist und/oder eine Rolloeinheit (60) nach Anspruch 1 oder 2 aufweist.

## Claims

1. Roller unit (60) for shading a rear triangular glass (18b) of a two-part side window (14) of a vehicle, having
- a flexible two-dimensional structure (66) and
- a winding shaft (64) rotatable about a vertical axis (62),
wherein
- the two-dimensional structure (66), in a stored state, is wound up on the winding shaft (64) and, in a functional state, is unwound from the winding shaft (64) in the horizontal extension direction (2), and
- the roller unit comprises an extension-spring assembly (80, 84) which engages on a distal end (68, 70) of the two-dimensional structure and causes a subjection of the two-dimensional structure (66) to a force in the direction (2) of the functional state,
**characterized in that**
the extension-spring assembly (80, 84) has a lever (80), pivotable about a pivot axis (82) stationary in relation to the rotation axis of the winding shaft, which, for subjecting the two-dimensional structure (66) to a force, is subjected by way of a lever spring (84), acting on the lever (80), to torque in the extension direction (2), and the distal end (86) of which that is remote from the pivot axis (82) is attached on the distal end (68, 70) of the two-dimensional structure (66).

2. Roller unit according to Claim 1,
**characterized in that**
on the distal end of the lever, or on the distal end of the two-dimensional structure, a balancing means for balancing a linear extension motion of the two-dimensional structure (66) and an orbital motion defined by the pivotability of the lever (80) is provided.

3. Shading system (20) for shading a two-part side window (14) of a motor vehicle (10), having
- a first roller unit (30) for shading a first glass (18a) of the side window (14), wherein the first roller unit (30) has a first flexible two-dimensional structure (36) and a first rotatable winding shaft (34), and wherein the first two-dimensional structure (36), in a stored state, is wound up on the first winding shaft (34) and, in a functional state, is unwound from the first winding shaft (34),
- a second roller unit (60) for shading a second glass (18b) of the side window (14), wherein the second roller unit (60) has a second flexible two-dimensional structure (66) and a second rotatable winding shaft (64), and wherein the second two-dimensional structure (66), in a stored state, is wound up on the second winding shaft (64) and, in a functional state, is unwound from the second winding shaft,
wherein
- the roller units (30, 60) are configured for at least indirect manual changeover from the stored state to the functional state,
- the first two-dimensional structure (36) is provided for manual changeover to the functional state by means of subjection of the distal end (38, 40) of the first two-dimensional structure (36) to external force, and
- the roller units (30, 60) are functionally coupled in such a manner that manual changeover of the first two-dimensional structure (36) to its functional state indirectly also causes changeover of the second two-dimensional structure (66) to its functional state,
**characterized in that**
the second roller unit (60) is configured according to Claim 1 or 2.

4. Shading system (20) according to Claim 3, **characterized in that**
- the first and the second winding shafts (34, 64), by means of a transmission (22), are mechanically coupled such that subjection of the first winding shaft (34) to torque causes subjection of the second winding shaft (64) to torque,
- a winding-spring assembly (44) which acts on at least one of the winding shafts (34) and causes subjection of the winding shafts (34, 64) to torque in the winding-up direction is provided,
- the extension-spring assembly (80, 84) and the winding-spring assembly (44) are adapted to one another in such a manner that the roller units (30, 60), in the absence of subjection of the distal end (38, 40) of the first two-dimensional structure (36) to external torque, assume their stored state.

5. Shading system (20) according to Claim 3 or 4, **characterized in that**
a rotation axis (32) of the first winding shaft (34) is configured so as not to be parallel with a rotation axis (62) of the second winding shaft (64).

6. Shading system (20) according to Claim 4 or 5, **characterized in that**
the winding-spring assembly (44) disposes of only one winding spring (44), wherein this winding spring (44) acts indirectly, via the first or the second winding shaft (34), on the respective other winding shaft (64).

7. Shading system (20) according to one of Claims 4 to 6,
**characterized in that**
the transmission (22) is a gear transmission, preferably a gear transmission having two bevel gears (46, 76) which are in each case provided in a rotationally fixed manner on one of the winding shafts.

8. Side door (12) for a motor vehicle (10), having a two-part side window (14) and a shading system (20) for shading the side window (14), **characterized in that**
the shading system (20) is configured according to one of Claims 3 to 7 and/or has a roller unit (60) according to Claim 1 or 2.

9. Side door (12) according to Claim 8, having a shading system according to one of Claims 3 to 7, **characterized in that**
a web (16) is provided between the first glass (18a) of the side window (14) and the second glass (18b) of the side window (14), wherein the second winding shaft (64) is attached on this web (16).

10. Motor vehicle (10) having a two-part side window (14) and a shading system (20) for shading the side window (14),
**characterized in that**
the shading system (20) is configured according to one of Claims 3 to 7 and/or has a roller unit (60) according to Claim 1 or 2.

## Revendications

1. Unité de store à enrouleur (60) pour l'ombrage d'une vitre arrière triangulaire (18b) d'une fenêtre latérale en deux parties (14) d'un véhicule, comprenant
- une structure plane flexible (66) et
- un arbre d'enroulement (64) pouvant tourner autour d'un axe vertical (62),
- la structure plane (66) étant enroulée sur l'arbre d'enroulement (64) dans un état de rangement et, dans un état de fonctionnement, étant déroulée de l'arbre d'enroulement (64) dans la direction d'extraction horizontale (2) et
- l'unité de store à enrouleur comprenant un agencement de ressort d'extraction (80, 84) qui vient en prise au niveau d'une extrémité distale (68, 70) de la structure plane et qui provoque une sollicitation par force de la structure plane (66) dans la direction (2) de l'état de fonctionnement,
**caractérisée en ce que**
l'agencement de ressort d'extraction (80, 84) présente un levier (80) pouvant pivoter autour d'un axe de pivotement (82) fixe par rapport à l'axe de rotation de l'arbre d'enroulement, lequel levier est sollicité par un couple en vue de la sollicitation par force de la structure plane (66) dans la direction d'extraction (2) par un ressort de levier (84) venant en prise au niveau du levier (80) et dont l'extrémité distale (86) opposée à l'axe de pivotement (82) est appliquée contre l'extrémité distale (68, 70) de la structure plane (66).

2. Unité de store à enrouleur selon la revendication 1,
**caractérisée en ce**
**qu'**un moyen d'équilibrage est prévu à l'extrémité distale du levier ou à l'extrémité distale de la structure plane pour réaliser l'équilibrage entre un mouvement d'extraction linéaire de la structure plane (66) et un mouvement de trajectoire circulaire défini par la capacité de pivotement du levier (80).

3. Système d'ombrage (20) pour l'ombrage d'une fenêtre latérale en deux parties (14) d'un véhicule automobile (10), comprenant
- une première unité de store à enrouleur (30) pour l'ombrage d'une première vitre (18a) de la fenêtre latérale (14), la première unité de store à enrouleur (30) présentant une première structure plane flexible (36) et un premier arbre d'enroulement rotatif (34) et la première structure plane (36), dans un état de rangement, étant enroulée sur le premier arbre d'enroulement (34) et, dans un état de fonctionnement, étant déroulée du premier arbre d'enroulement (34),
- une deuxième unité de store à enrouleur (60) pour l'ombrage d'une deuxième vitre (18b) de la fenêtre latérale (14), la deuxième unité de store à enrouleur (60) présentant une deuxième structure plane flexible (66) et un deuxième arbre d'enroulement rotatif (64) et la deuxième structure plane (66), dans un état de rangement, étant enroulée sur le deuxième arbre d'enroulement (64) et, dans un état de fonctionnement, étant déroulée du deuxième arbre d'enroulement,
- les unités de store à enrouleur (30, 60) étant réalisées de manière à pouvoir passer au moins indirectement manuellement de l'état de rangement à l'état de fonctionnement,
- la première structure plane (36) étant prévue pour passer manuellement dans l'état de fonctionnement au moyen d'une sollicitation par force externe à l'extrémité distale (38, 40) de la première structure plane (36), et
- les unités de store à enrouleur (30, 60) étant accouplées fonctionnellement de telle sorte que le passage manuel de la première structure plane (36) dans son état de fonctionnement provoque indirectement également le passage de la deuxième structure plane (66) dans son état de fonctionnement,
**caractérisé en ce que**
la deuxième unité de store à enrouleur (60) est réalisée selon la revendication 1 ou 2.

4. Système d'ombrage (20) selon la revendication 3,
**caractérisé en ce que**
- le premier et le deuxième arbre d'enroulement (34, 64) sont accouplés mécaniquement au moyen d'une transmission (22), de telle sorte qu'une sollicitation par couple du premier arbre d'enroulement (34) provoque une sollicitation par couple du deuxième arbre d'enroulement (64),
- un agencement de ressort d'enroulement (44) est prévu, lequel vient en prise au niveau d'au moins l'un des arbres d'enroulement (34) et provoque une sollicitation par couple des arbres d'enroulement (34, 64) dans la direction d'enroulement,
- l'agencement de ressort d'extraction (80, 84) et l'agencement de ressort d'enroulement (44) sont adaptés l'un à l'autre de telle sorte que les unités de store à enrouleur (30, 60), en l'absence de la sollicitation par force externe de l'extrémité distale (38, 40) de la première structure plane (36), adoptent leur état de rangement.

5. Système d'ombrage (20) selon la revendication 3 ou 4,
**caractérisé en ce**
**qu'**un axe de rotation (32) du premier arbre d'enroulement (34) est réalisé de manière non parallèle à un axe de rotation (62) du deuxième arbre d'enroulement (64).

6. Système d'ombrage (20) selon la revendication 4 ou 5,
**caractérisé en ce que**
l'agencement de ressort d'enroulement (44) dispose d'un seul ressort d'enroulement (44), ce ressort d'enroulement (44) agissant de manière indirecte par le biais du premier ou du deuxième arbre d'enroulement (34) sur l'autre arbre d'enroulement respectif (64).

7. Système d'ombrage (20) selon l'une quelconque des revendications 4 à 6,
**caractérisé en ce que**
la transmission (22) est une transmission à roues dentées, de préférence une transmission à roues dentées avec deux roues coniques (46, 76) prévues à chaque fois de manière solidaire en rotation au niveau de l'un des arbres d'enroulement.

8. Porte latérale (12) pour un véhicule automobile (10) comprenant une fenêtre latérale en deux parties (14) et un système d'ombrage (20) pour l'ombrage de la fenêtre latérale (14),
**caractérisée en ce que**
le système d'ombrage (20) est réalisé selon l'une quelconque des revendications 3 à 7 et/ou présente une unité de store à enrouleur (60) selon la revendication 1 ou 2.

9. Porte latérale (12) selon la revendication 8,
comprenant un système d'ombrage selon l'une quelconque des revendications 3 à 7, **caractérisée en ce**
**qu'**entre la première vitre (18a) de la fenêtre latérale (14) et la deuxième vitre (18b) de la fenêtre latérale (14) est prévue une nervure (16), le deuxième arbre d'enroulement (64) étant monté sur cette nervure (16).

10. Véhicule automobile (10) comprenant une fenêtre latérale en deux parties (14) et un système d'ombrage (20) pour l'ombrage de la fenêtre latérale (14),
**caractérisé en ce que**
le système d'ombrage (20) est réalisé selon l'une quelconque des revendications 3 à 7 et/ou présente une unité de store à enrouleur (60) selon la revendication 1 ou 2.
